# EUROPEAN PATENT SPECIFICATION

(11) **EP 1 625 767 B1**
(45) Date of publication and mention of the grant of the patent: **03.04.2013**
(21) Application number: 04732677.2
(22) Date of filing: 13.05.2004
(51) Int. Cl.: H04W 12/02, H04L 29/06

(54) **MULTIMEDIA COMPONENT INTERCEPTION IN A GATEWAY GPRS SUPPORT NODE (GGSN)**
MULTIMEDIAKOMPONENTENERFASSUNG IN EINEM GPRS ÜBERGANGSUNTERSTÜTZUNGSKNOTEN (GGSN)
INTERCEPTION DE COMPOSANT MULTIMEDIA DANS UN NOEUD DE SUPPORT D'UNE PASSERELLE GPRS (GGSN)

(30) Priority: 16.05.2003 EP 03011271; 25.08.2003 US 647141
(43) Date of publication of application: 15.02.2006
(73) Proprietor: Nokia Siemens Networks Oy, 02610 Espoo (FI)
(72) Inventor: MÄKI, Toni, FIN-00430 Helsinki (FI); JOKINEN, Aarne, FIN-02760 Espoo (FI); SAUKKONEN, Marko, FIN-00200 Helsinki (FI)
(74) Representative: Borgström, Markus
(86) International application number: PCT/IB2004/001543
(87) International publication number: WO 2004/103006

(56) References cited:
- WO-A-02/093838
- US-A1- 2002 078 384
- TELCORDIA TECHNOLOGIES AND FEDERAL BUREAU OF INVESTIGATION: "Interception regarding IMS" 3GPP TSG-SA WG3 LI MEETING, TDOC S3LI02-150R1, [Online] 24 September 2002 (2002-09-24), page 1-9, XP002299141 Retrieved from the Internet: URL:http://www.3gpp.org/ftp/tsg_sa/WG3_Sec urity/TSGS3_LI/2002_09_Helsinki/S3LI02_150 r1 IMS.doc> [retrieved on 2004-10-04]
- "Digital cellular telecommunications system (Phase 2+); Universal Mobile Telecommunications System (UMTS); Policy control over Go interface (3GPP TS 29.207 version 5.3.0 Release 5); ETSI TS 129 207" ETSI STANDARDS, EUROPEAN TELECOMMUNICATIONS STANDARDS INSTITUTE, SOPHIA-ANTIPO, FR, vol. 3-CN3, no. V530, March 2003 (2003-03), XP014009627 ISSN: 0000-0001
- "Universal Mobile Telecommunications System (UMTS); Lawful interception requirements (3GPP TS 33.106 version 5.1.0 Release 5); ETSI TS 133 106" ETSI STANDARDS, EUROPEAN TELECOMMUNICATIONS STANDARDS INSTITUTE, SOPHIA-ANTIPO, FR, vol. 3-SA3, no. V510, September 2002 (2002-09), XP014010224 ISSN: 0000-0001
- "Universal Mobile Telecommunications System (UMTS); 3G security; Lawful interception architecture and functions (3GPP TS 33.107 version 5.5.0 Release 5); ETSI TS 133 107", ETSI STANDARDS, LIS, SOPHIA ANTIPOLIS CEDEX, FRANCE, vol. 3-SA3, no. V5.5.0, 1 December 2002 (2002-12-01), XP014010238, ISSN: 0000-0001

## Description

### BACKGROUND OF THE INVENTION:

### Field of the invention:

This invention relates to a method and a system for intercepting sessions.

### Description of the Related Art:

The 3GPP (Third Generation Partnership Project) Release 5 and Release 6 standards (defined in 3GPP TS 23.228 V5.7.0/6.1.0, for example) define IP (Internet Protocol) Multimedia Core Network Subsystem (IMS). IMS provides users IP based multimedia services like voice over IP, for example. Operators benefit from IMS as services offered traditionally in circuit switched and packet switched networks can be converged into one network using one technology.

The IP Multimedia Core Network Subsystem uses GPRS (General Packet Radio Service) as an underlying access and bearer technology (3GPP TS 22.060 V5.2.0). GPRS provides mobile hosts connectivity to packet-based networks like Internet or company intranets. It does this by introducing two network elements, GPRS Support Nodes, and IP based packet core network. Serving GPRS Support Node (SGSN) takes care of terminal mobility, security operations and access control. Gateway GPRS Support Node (GGSN) acts as a gateway providing internetworking with packet data networks. User data is carried between SGSN 32 and GGSN 33 in tunnel provided by GTP (GPRS Tunneling Protocols PDP (Packet Data Protocol) context defines the tunnel between SGSN 32 and GGSN 33, and references to the access point that defines how the user data packets are handled at the GGSN 33 and beyond. For example, they might be further tunneled to an intranet. In this description PDP context and the tunnel through GPRS core network are treated as synonyms.

Sessions in IMS are created using SIP (Session Initiation Protocol, as defined in IETF RFC 3261, for example). IMS contains a dedicated network element, CSCF (Call Session Control Function) that handles SIP signaling. IMS level session data is stored in the CSCFs and is not visible to GPRS. To an IMS level session there is associated one or more media components (also known as media streams). One media component includes packets belonging to the same stream defined by either IPv6 (Internet Protocol version 6) flow label or quintuple containing source address, destination address, source port, destination port used protocol. Media components are carried inside a PDP context. One PDP context may carry several media components. In 3GPP Release 5 one PDP context may carry the media components of only one IMS level session. In 3GPP Release 6 one PDP context may carry media components of several IMS level sessions.

In most of the countries operators are under an obligation to provide authorities access to the information exchanged between communicating parties in a telecommunications network. Implementing lawful interception and delivering the intercepted data might be a precondition for a license to operate a commercial network. The obligation to provide lawful interception ability to authorities applies also to IP Multimedia Core Network Subsystem. Lawful interception is specified by 3GPP standards TS 33.106 V5.1.0, TS 33.107 V5.5.0 and TS 33.108 V5.3.0/6.1.0, for example.

In GPRS the lawful interception is based on one of the following user identities: IMSI (International Mobile Subscriber Identity), MSISDN (Mobile Subscriber International ISDN Number) or IMEI (International Mobile Station Equipment Identity). The interception is applied to signaling and to the actual user data carried in PDP context.

According to 3GPP TS 33.106 V5.1.0, the lawful interception in IMS is based on SIP URL (Uniform Resource Locator). Using this SIP URL the IRI (Interception-Related Information) data from IMS level can be intercepted. To be able to intercept communication content (CC), GPRS level interception is needed. This is accomplished by interworking of CSCF and GGSN 33. After a signaling exchange, the CSCF knows the PDP context identification used in GPRS network and it can deliver the information to an ADMF 34 (Administration Function). The ADMF 34 may then activate interception in the GPRS level targeted on appropriate PDP context(s).

In 3GPP Release 6 one PDP context may carry media components of several IMS level sessions. It is possible, that in the network there will appear such a set-up, where the wrong user's data gets intercepted by accident. This kind of unauthorized interception is illegal and cannot be allowed to appear in IMS.

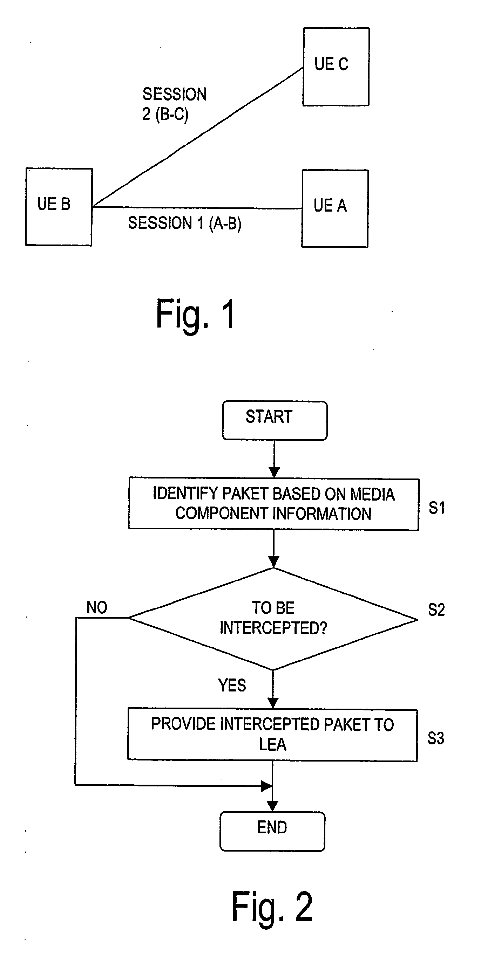

The capture of the wrong user's data happens in a following set-up, which is illustrated in Fig. 1: Interception happens in a local network, Network 1. A remote party, Subscriber A (UE A) denoted by reference numeral 11, belonging to a remote network, Network 2, is intercepted in the local network, Network 1. Subscriber B (UE B) denoted by reference numeral 12, to whom the Subscriber A is calling, has another on-going IMS level session with a Subscriber C (UE C), denoted by reference numeral 13. Both of these sessions (A - B session, session 1, and B - C session, session 2) are carried over one PDP context from UE of subscriber B to GGSN 33 in local network. Because the GPRS level interceptions currently capture all the data carried by a PDP context, also the media component of the session between Subscriber B and Subscriber C gets intercepted. This should not occur since only subscriber A is to be intercepted and the accidental interception of the session 2 between subscribers B and C is illegal.

It is noted that in 3GPP Release 5 this set-up is not possible as PDP context can carry the media components of only one IMS level session, as described above.

However, in 3GPP Release 6 and similar configurations in which more than one session can be included in one PDP context, this is a serious problem, since in this case interception can likely become illegal.

Document "TELCORDIA TECHNOLIGIES ET AL: "Interception regarding IMS"; 3GPP TSG-SA WG3 LI Meeting, TDOC S3LI02-150r1; 24.09.2002, pages 1-9, XP002299141, discloses a method, a system and a node for intercepting sessions as defined in claims 1, 12 and 25, respectively. In detail, when intercepting session, a packet of a session to be intercepted is identified based on media component information of the session, and if the packet to be intercepted is identified, duplicated packets of the session are provided to an interception management element such as a LEA. Hence, IMS interception is described, wherein an isolation of media streams is performed.

### SUMMARY OF THE INVENTION:

The object underlying the present invention resides in solving the above problem and to provide a method and a network system by which reliably only those sessions are intercepted which are intended to be intercepted.

This object is solved by a method for intercepting sessions as defined in claim 1.

Alternatively, this object is solved by a system for intercepting sessions as defined in claim 10.

Furthermore, the above object is solved by a node for intercepting sessions as set out in claim 21.

Advantageous developments are defined in the dependent claims.

Thus, according to the invention, instead of capturing the traffic carried in a PDP context, the traffic carried in a media component is captured. This provides a more fine-grained interception where only the traffic meant to be intercepted gets captured and forwarded to an interception management element (e.g., LEA (Law Enforcement Agency)).

Hence, a case in which a second session not to be intercepted is accidentally intercepted can reliably be avoided, since the identification based on the media component information provides a more reliable basis than a PDP context.

Preferably, the media component interception can be performed in GGSN 33 as it handles the IP header of the user data. SGSN 32 forwards this IP header transparently.

The media component information may include a multimedia level session identification and a control level media component identification associated to the multimedia level session identification. For example, the multimedia level session identification may be an IMS level session identification.

The multimedia level session identification may include an authorization token, or may comprise a multimedia charging identifier (ICID, IMS Charging Identifier).

The control level media component identification may include a flow identifier, as defined in 3GPP TS 29.207 V5.2.0, Annex C, for example.

The media component information may include user level media component information.

Furthermore, before performing the actual interception (identifying and providing packets to the interception management element), an activation of the interception may be performed, in which the media component information are obtained from a session initiating procedure in which a target to be intercepted is participating. Thus, the necessary information can easily be provided to the intercepting node and the like. The activation may be performed by a network control element such as an Administration Function (ADMF), for example.

On activating the interception, the media component information may be obtained from user plane data. That is, in this case it can be secured that the traffic to be intercepted belongs to a user the communication of which is to be intercepted. For example, the media component information are obtained from session establishment messages during set-up of a session and negotiating a media component.

Alternatively, upon providing intercepted data to the intercepting management element, data not to be intercepted may be filtered out. In this case, it is possible to intercept the whole traffic, but the data which is not to be intercepted is filtered out, so that this data (e.g., another media component) is not forwarded to the interception management element. Hence, an illegal interception can reliably be prevented.

The filtering may be performed based on media component information or may be based on charging identifiers. For example, such a charging identifier may be a IMS charging ID (ICID). The GPRS Charging ID or IMSI may be used to activate the interception, which then deliver the whole traffic. The data not to be intercepted can than be filtered out by using media component information.

The filtering may be performed in the intercepting node such as SGSN 32 or GGSN 33, for example, or, alternatively, the filtering may be performed in a separated node. Such a separated node may be a Delivery Function DF3, for example.

### BRIEF DESCRIPTION OF THE DRAWINGS:

Fig. 1 shows a situation according to the prior art, in which an illegal interception may accidentally occur:
Fig. 2 shows a flowchart illustrating the principle of the invention;
Fig. 3 illustrates activation of interception of a media component MC2 according to a first embodiment of the invention;
Fig. 4 shows a signaling flow of the activation of the interception according to the first embodiment;
Fig. 5 illustrates the provision of content of communication carried in the media component MC2 according to the first embodiment; and
Fig. 6 illustrates a second embodiment of the invention.

### DETAILED DESCRIPTION OF THE PREFERRED EMBODIMENTS:

In the following, the embodiments of the invention are described by referring to the enclosed drawings.

In the following, the principle according to the invention is described by referring to a flowchart shown in Fig. 2.

According to the invention, the traffic carried in a media component is captured, instead of capturing the traffic carried in a PDP context. This can be effected in a GGSN 33, for example, since it handles the IP header of the user data.

Fig. 2 shows a flowchart of a procedure how the traffic carried in a media component is captured, i.e., how a packet of a media component are identified and provided to a Lawful Enforcement Agency (LEA) (as an example for an interception management element).

The procedure is started each time a packet arrives at the corresponding intercepting node (i.e., the GGSN 33 in this example). In step S1, the packet is identified based on media component information contained in the packet header. Based on the media component information, a check is performed to determined whether-this packet belongs to a session which is actually to be intercepted (step S2). If not, the procedure ends without performing any interception. If, however, it is determined that the particular packet is to be intercepted, the intercepted information is forwarded to an interception management element (step S3), such as a LEA (Law Enforcement Agency) .

Thus, according to the invention the traffic carried in a media component is captured.

In the following, a first embodiment of the invention is described, in which the invention is described in more detail. In particular, two operations necessary for interception can be distinguished, namely activation of media component interception and provision of content of communications carried in media component. In the first embodiment, SIP is used as an example for a session protocol, and data is sent via packets using GPRS.

In the following, the activation of the media component interception is described. This has to be performed before the actual interception is carried out. In particular, in the activation some kind of information has to be obtained by which a packet of a media component to be intercepted can identified uniquely. Moreover, the network node(s) participating in the interception have to be activated (e.g., the GGSN 33).

There are two kinds of information elements by which a media component may be uniquely identified: IMS level session identification and media component identification associated with the former. That is, the media component information described above may include the IMS level session identification and the associated media component identification. An information element used to identify the IMS level session (i.e., which can be used as the IMS level session identification) can be a so-called Authorization Token, as defined in 3GPP TS 29.207 V5.2.0 and TS 24.008 V5.6.0, for example, or ICID (IMS Charging Identifier), as defined in 3GPP TS 32.225 V5.2.0. The ICID is generated by the IMS node for a SIP session, and the value thereof is globally unique across all 3GPP IMS networks for a time period of at least one month, implying that neither the node that generated this ICID nor any other IMS node reuse this value before the uniqueness period expires. Hence, it can be used to reliably identify a particular multimedia component. According to this example, the Authorization Token is used.

The media component identification as described above is associated to the IMS level session identification and uniquely identifies the media component within the session identified by the IMS level session identification. A flow identifier is defined in 3GPP TS 29.207 V5.2.0 (Annex C), for example, and is generally used for the identification of an IP flow within a media component associated with a SIP session. The flow identifier includes the format of <Media component no, IP flow no>. According to this example, this flow identifier is used as a media component identification in interception activation. This type of media component identification is a control level identification and is referred to as control level media component identification in the following.

Alternatively, the media component information may include a user level identification, which is referred to as user level media component information in the following. The user level media component identification may be an Ipv6 flow ID or the quintuple of IP source/destination address, TCP/UDP source/destination port and used protocol.

It is noted that the control level media component identification needs to be accompanied with the session identification in order to be unique, whereas the user level media component information does not need such a session identification.

The user level media component information can be referred to as network layer and/or transport layer information in user data. In provision of communication content, a media component may be identified by such network layer and/or transport layer information in user data. The network layer-only identification information includes flow label field of IPv6 header (as defined in IETF RFC 2460, for example). The combined network layer and transport layer information is a combination of source address, destination address and protocol fields of IP header and source port and destination port fields of UDP (User Datagram Protocol) or TCP (Transmission Control Protocol) header (as defined in IETF RFC 768, RFC 793, respectively).

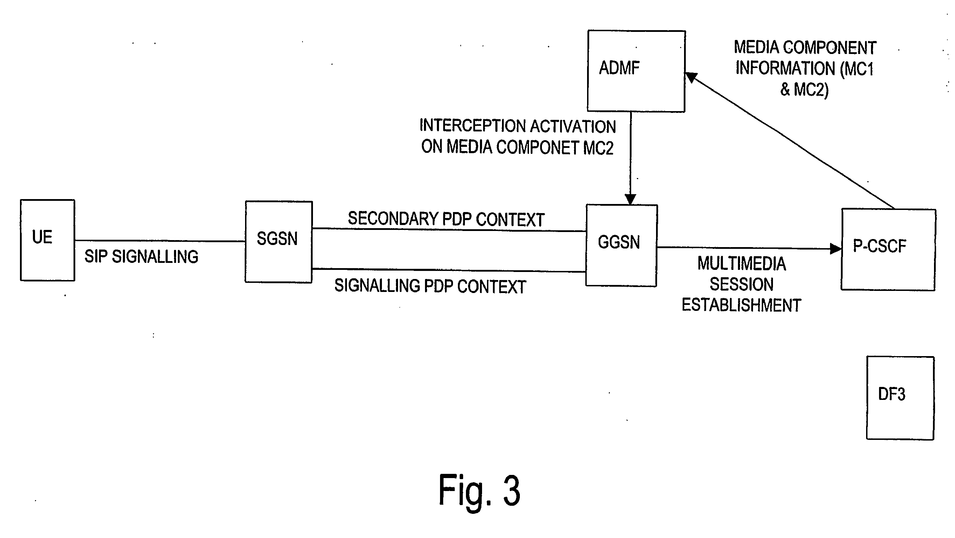

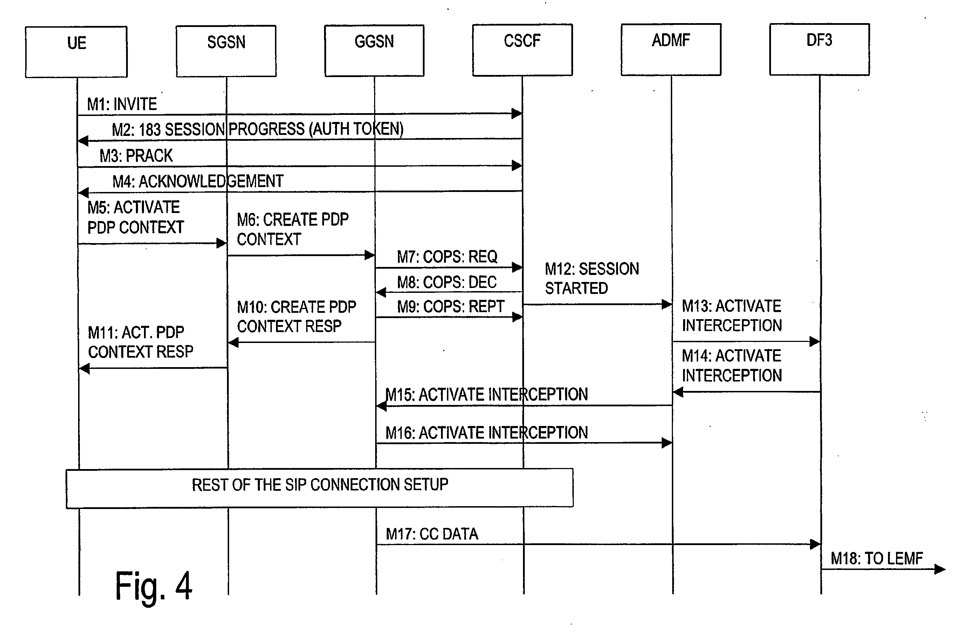

In the following, the activation of the media component interception is described by referring to Figs. 3 and 4.

Fig. 3 illustrates the activation of interception of a media component MC2, whereas Fig. 4 illustrates the relevant signaling flow of the activation of the interception.

In detail, Fig. 3 shows a situation in which sessions of a user entity UE (denoted by reference numeral 31) of a subscriber (e.g., subscriber A as in Fig. 1) is to be intercepted. In this example it is assumed that the target UE shown in Fig. 3 performs two media sessions. That is, two media components MC1 and MC2 are to be considered, wherein only media component MC2 is to be intercepted. Comparing to the situation in Fig. 1, it is noted that the UE 31 shown in Fig. 3 corresponds to UE B 12 performing a first session with UE C 13 (media component MC1, not to be intercepted) and a second session with UE A 11 (media component MC2, to be intercepted).

The UE 31 is connected to a SGSN 32 32, which in turn is connected to a GGSN 33. The GGSN 33 is connected to a P-CSCF 35 (Proxy CSCF) 35. During the session establishment, the UE 31 communicates with SIP protocol with CSCF (in this case P-CSCF 35) 35. The GPRS network (SGSN 32 and GGSN 33) provide the transport of the SIP messages. SIP protocol messages are carried in the signaling PDP context between SGSN 32 and GGSN 33. Moreover, a secondary PDP context is established between SGSN 32 and GGSN 33, which serves to carry user data that may have special requirements (e.g., Quality of Service (QoS) requirements). The secondary PDP context is not active during session establishment, but is created during the session establishment for user data. Alternatively only one general purpose PDP context may be used which carries both signaling and user data.

In addition, an ADMF 34 (Administration Function) 34 is provided which is adapted to receive information from the P-CSCF 35, for example, and to instruct other network elements (e.g., the GGSN 33) to carry out the interception. In particular, the ADMF 34 receives media component information from the P-CSCF 35. The ADMF 34 then sends a message to the GGSN 33 regarding an interception activation on the media component MC2.

Moreover, also a DF3 36 (Delivery Function 3) 36 is provided, by which during the interception the communication content (CC) data is forwarded to a LEMF (Law Enforcement Monitoring Facility), for example. During interception activation, the DF3 36 only receives an interception activation message from the ADMF 34 (this step not illustrated in the figure).

The signaling flow during interception activation according to the first embodiment is described in the following by referring to the diagram shown in Fig. 4. It is noted that messages M1 to M11 refer to the normal session establishing procedure, whereas the messages M12 to M16 refer to the interception. Moreover, in this example it is assumed that the subscriber to be intercepted is originating a call.

During session establishment (i.e., after sending a SIP INVITE request to the CSCF in M1), an Authorization Token is created for the session in PDF (as described in 3GPP TS 29.207 V5.2.0, for example). The Authorization Token is delivered to UE 31 (User Entity) in a 183 Session Progress SIP message (M2). The UE 31 responses with a PRACK (Provisional Acknowledgement) message (M3), thereafter a further acknowledgment message is sent to the UE. It is noted that the flow identifiers may be carried in all of the messages M1 to M4. The messages M1 to M3 perform a handshaking process between P-CSCF 35 and UE 31 in which the media components parameters (codecs, delays, other parameters) are negotiated. Message M4 is an acknowledgement to the message M3.

In general, the flow identifiers are specified by the SDP (Session Description Protocol) descriptions that UE 31 receives in INVITE, 183 Session Progress and PRACK messages. In which messages the UE 31 receives SDP descriptions depends on the role of the UE 31 in session establishment (3GPP TS 24.228 V5.3.0, for example). All of the SIP messages are transferred in the user plane of the GPRS.

At some point of the session establishment after the media component negotiation is finished (after receiving PRACK), it sends authorization token, flow identifiers (alternatively SDP descriptions) and associated IMS identity to ADMF 34 in message M12. In case it is decided that the session is actually to be intercepted, the interception is activated. In messages M13 and M14, the corresponding DF3 36 is activated. In messages M15 and M16, the ADMF 34 requests GGSN 33 to activate media component interception based on the authorization token and appropriate flow identifier. In detail, the main content in messages M13 and M15 is the media component information, which the GGSN 33 and the DF3 36 need for the interception, and an LIID (Lawful Interception ID) that uniquely define the interception within the intercepting network.

After the session originating UE and a session terminating UE (i.e., the called user identity) have agreed on media components, they perform resource reservation in GPRS. This is performed in messages M5 to M11. The authorization token and flow identifiers are passed from the UE to the GGSN 33 via SGSN 32 in GPRS control plane message Activate PDP Context Request (M5) and Create PDP Context Request (M6). Besides, it is noted that an Information element in Create PDP Context Request that carries authorization token and flow identifiers is TFT (Traffic Flow Template, as defined in 3GPP TS 29.060 V5.5.0 and TS 24.008 V5.6.0, for example).

The GGSN 33 then performs media authorization with PDF and learns the relationships between user plane and control plane identification of media components. This is effected in messages M7 to M9, wherein in M7 a COPS (Common Open Policy) REQ (request) message is sent to the CSCF, by means of which the GGSN 33 issues a configuration request, e.g., for establishing a media component. In message M8, the CSCF responds with a COPS DEC (decision) message, i.e., acknowledges that the request is granted. When the GGSN 33 is ready, it sends a COPS REPT message to the CSCF (M9). In message M10, a corresponding Create PDP contest response is sent to the SGSN, and in message M11, a corresponding Activate PDP context response is sent to the UE 31. After this, the normal SIP connection is set up, which is indicated in Fig. 4 by a corresponding block.

As described above, by the COPS REQ and COPS DEC messages M7 and M8, media component information is exchanged between the P-CSCF 35 and the GGSN 33. That is, in this messages the relevant information for identifying a session to be intercepted are contained.

It is noted that according to this example, the message M12, by which the activation of the interception is started, is sent after the P-CSCF 35 has sent the COPS DEC to the GGSN 33 in message M8. However, the message M12 can be sent to an arbitrary point of time after the media component negotiation is finished (messages M1 to M4). That is, for example, the message M12 can be sent immediately after the P-CSCF 35 has sent the acknowledgement message M4, which would be the earliest point of time. Alternatively, the message M12 may be sent after the P-CSCF 35 has received the COPS REPT message M9. When doing this, it is made sure that the GGSN 33 is ready and that the session is actually going to be carried out.

Because in provision of content of communications the identification of a media component is done by using information in headers in user plane data, GGSN 33 can use authorization token and flow identifiers (which are control plane information, as described above) only during interception activation. GGSN 33 performs the actual interception activation based on the user level media component information contained in headers in the user plane data.

Next, the provision of Content of Communications carried in the media component is described.

According to this example, the implementation of content of communication provision is rather straightforward. When the GGSN 33 notices that a packet belongs to an intercepted media component, it duplicates the packet and forwards the duplicate (i.e., the CC data) to DF3 36 (message M17). The DF3 36 forwards the CC data to the LEMF in message M18. As stated earlier, the GGSN 33 notices that a packet belongs to a certain media component by examining the network/transport layer headers in the user data and compares them to the user level identification of the media component.

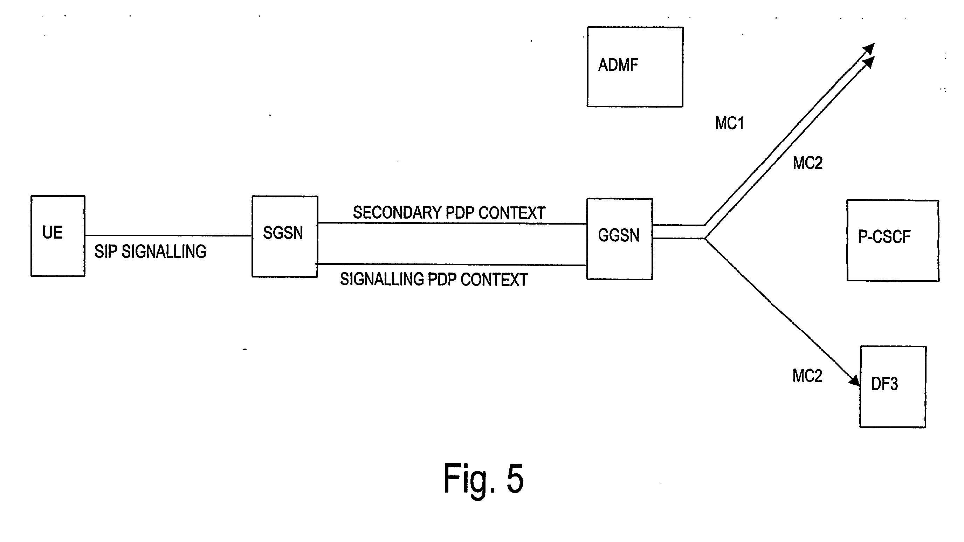

Fig. 5 presents the provision of content of communications carried in the media component MC2. The configuration of Fig. 5 is the same as that of Fig. 3. In this example, the two sessions of the subscriber (UE) 31 are established, such that a media component MC1 and a media component MC2 are sent by the GGSN 33 to two different receiver. In this case, only the media component MC2 is intercepted and forwarded to the DF3 36 36.

Next, a second embodiment of the invention is described.

According to the second embodiment, the implementation of media component interception is eased such that the interception activation and provision may exploit current solutions. Instead of directly activating the interception using media component information, as described in connection with the first embodiment, it is activated using either user identification (e.g. IMSI) or PDP context identification (e.g. GPRS Charging ID) and the unwanted data is filtered out.

This requires that in addition to the authorization token, flow identifiers and associated IMS identity, the ADMF 34 receives also the GPRS Charging IDs of each PDP context used in IMS level session. ADMF 34 can then directly activate interceptions for each PDP context or use the GPRS charging IDs to resolve the IMSI before performing the IMSI activation. If filtering is to be done in GGSN 33 or in SGSN 32 the media component information needs to be delivered to the intercepting node (i.e., GGSN 33 or SGSN) with the interception activation request. If the filtering is done in DF3 36 (Delivery Function 3) the media component information needs to be delivered to it.

The media component information needs to be user level information in the implementation alternative using filtering. According to the second embodiment, the media component information have to be user level media component information because SGSN 32 and DF3 36 by default do not have access to control level media component information, unlike the GGSN 33 has.

The provision of the content of the communication can be done in the following way. The intercepting node examines the GTP header of a packet and checks whether the IMSI or GPRS Charging ID found in the header is intercepted. If it is and only if it is, the IP and transport layer information is compared to user level media component information. In this way, the unwanted data is filtered out based on the user level media component information.

As mentioned above, this filtering can be done either in the intercepting node or in DF3 36 (Delivery Function 3) 36.

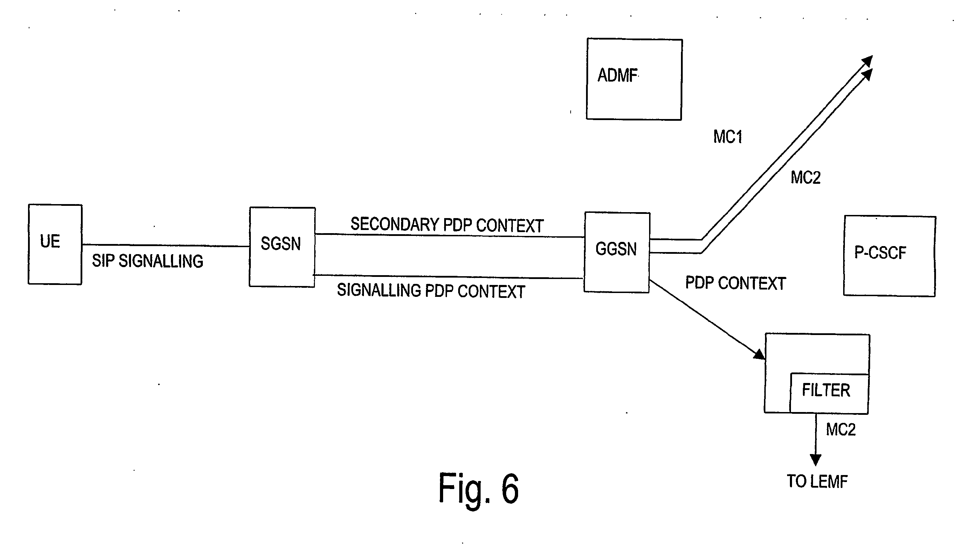

The latter case is illustrated in Fig. 6. The structure is similar to that of Fig. 3 or 5, with the exception that now the PDP context is forwarded to the DF3 36 56. As mentioned above, the PDP context includes both media components MC1 and MC2, of which only MC2 is to be intercepted. Thus, the DF3 36 56 filters the media component MC1 out by means of a filter 561, as mentioned above, so that only MC2 is provided to the LEMF.

Thus, the filtering approach according to the second embodiment is easy to implement, and it is advantageous that this approach can also be carried out in the SGSN. The invention is not limited to the embodiments described above but can vary within the scope of the claims.

For example, the above embodiments can be freely combined. For example, depending on the load of the interceptin node and/or network, the filtering according to the second embodiment may be carried out additionally.

Moreover, the use of GPRS is only an example. The invention can be applied to any packet based communication system in which an interception can be carried out.

Furthermore, according to the first embodiment, control level media component information are used during the interception activation whereas according to both the first and the second embodiment user level media component information are used to filter out the unwanted data. However, also according to the first embodiment user level media component may be used during the interception activation, and also according to the second embodiment, control level media component information may be used. This, however, may depend on the particular situation, i.e., whether the intercepting node (e.g., SGSN 32 or GGSN 33) is able to handle the particular type of media component information.

It is also noted herein that while the above describes exemplifying embodiments of the invention, there are several variations and modifications which may be made to the disclosed solution without departing from the scope of the invention as defined in the appended claims.

## Claims

1. A method for intercepting sessions, comprising
identifying (S1, S2) a packet of a session to be intercepted based on media component information of the session; the session being an IMS level session and,
if the packet to be intercepted is identified, providing (S3) duplicated packets of the session to an interception management element,
**characterized in that**
in the identifying, the packet to be intercepted is identified based on user level media component information being a user level identification.

2. The method according to claim 1, wherein the identifying comprises identifying the packet to be intercepted based on the media component information comprising a multimedia level session identification and a control level media component identification associated to the multimedia level session identification.

3. The method according to claim 2, wherein the identifying comprises identifying the packet to be intercepted based on the multimedia level session identification comprising an authorization token, identifying the packet to be intercepted based on the multimedia level session identification comprising a multimedia charging identifier, or identifying the packet to be intercepted based on the control level media component identification comprising a flow identifier.

4. The method according to claim 1, further comprising the step of:
activating the interception, which is performed before the identifying and in which the media component information are obtained from a session initiating procedure, in which session initiating procedure a target to be intercepted is participating.

5. The method according to claim 4, wherein the activating step comprises obtaining the media component information from user plane data.

6. The method according to claim 5, wherein the activating comprises obtaining the media component information from session establishing messages.

7. The method according to claim 1, wherein the providing comprises filtering out data not to be intercepted.

8. The method according to claim 7, wherein the providing comprises filtering out the data, which comprises a media component not belonging to the session to be intercepted.

9. The method according to claim 7, wherein the providing comprises performing the filtering based on media component identification or charging identifiers.

10. A system for intercepting sessions comprising an intercepting node and an intercepting management element, wherein
an intercepting node is configured to identify a packet of a session to be intercepted based on media component information of the session, the session being an IMS level session, and to provide duplicated packets of the session to an interception management element if the packet to be intercepted is identified,
**characterized in that**
the intercepting node is adapted to identify a packet to be intercepted based on user level media component information being a user level identification.

11. The system according to claim 10, wherein the media component information comprises a multimedia level session identification and a control level media component identification associated to the multimedia level session identification.

12. The system according to claim 11, wherein the multimedia level session identification comprises an authorization token, the multimedia level session identification comprises a multimedia charging identifier, or the control level media component identification comprises a flow identifier.

13. The system according to claim 10, further comprising an interception activation element which is configured to activate the interception wherein the media component information are obtained from a session initiating procedure, in which session initiating procedure a target to be intercepted is participating.

14. The system according to claim 13, wherein the activation element is configured to obtain the media component information from user plane data.

15. The system according to claim 14, wherein the activation element is configured to obtain the media component information from session establishing messages.

16. The system according to claim 10, further comprising a filter element configured to filter out data not to be intercepted.

17. The system according to claim 16, wherein the data not to be intercepted comprises a media component not belonging to the session to be intercepted.

18. The system according to claim 16, wherein the filter element is configured to filter out the data not to be intercepted based on media component identification or charging identifiers.

19. The system according to claim 16, wherein the filter element is included in the intercepting node.

20. The system according to claim 16, wherein the filter element comprises a node separated from the intercepting node.

21. A node for intercepting sessions, the node comprising:
identification means for identifying a packet of a session to be intercepted based on media component information of the session, the session being an IMS level session, and
providing means for, if the packet to be intercepted is identified, providing duplicated packets of the session to an interception management element,
**characterized in that**
the intercepting node is adapted to identify a packet to be intercepted based on user level media component information being a user level identification.

## Patentansprüche

1. Verfahren zum Abhören von Sitzungen, das Folgendes umfasst:
Identifizieren (S1, S2) eines Pakets einer Sitzung, die abgehört werden soll, basierend auf Medienkomponenteninformationen der Sitzung; wobei die Sitzung eine IMS-Ebenen-Sitzung ist, und
wenn das Paket, das abgehört werden soll, identifiziert ist, Bereitstellen (S3) duplizierter Pakete der Sitzung für ein Abhörmanagementelement,
**dadurch gekennzeichnet, dass**
beim Identifizieren das Paket, das abgehört werden soll, basierend auf Medienkomponenteninformationen auf Anwenderebene, die eine Anwenderebenenidentifikation sind, identifiziert wird.

2. Verfahren nach Anspruch 1, wobei das Identifizieren das Identifizieren des Pakets umfasst, das abgehört werden soll, basierend auf den Medienkomponenteninformationen, die eine Multimediaebenensitzungsidentifikation und eine Steuerebenenmedienkomponentenidentifikation, die der Multimediaebenensitzungsidentifikation zugeordnet ist, umfassen.

3. Verfahren nach Anspruch 2, wobei das Identifizieren das Identifizieren des Pakets, das abgehört werden soll, basierend auf der Multimediaebenensitzungsidentifikation, die ein Berechtigungs-Token enthält, das Identifizieren des Pakets, das abgehört werden soll, basierend auf der Multimediaebenensitzungsidentifikation, die eine Multimediagebührenerfassungskennung enthält, oder das Identifizieren des Pakets, das abgehört werden soll, basierend auf der Steuerebenenmedienkomponentenidentifikation, die eine Flusskennung enthält, umfasst.

4. Verfahren nach Anspruch 1, das ferner den folgenden Schritt umfasst:
Aktivieren des Abhörens, das vor dem Identifizieren ausgeführt wird und bei dem die Medienkomponenteninformationen aus einer Sitzungsinitiierungsprozedur gewonnen werden, wobei ein Ziel, das abgehört werden soll, an der Sitzungsinitiierungsprozedur teilnimmt.

5. Verfahren nach Anspruch 4, wobei der Aktivierungsschritt das Gewinnen der Medienkomponenteninformationen aus Daten der Anwenderebene umfasst.

6. Verfahren nach Anspruch 5, wobei das Aktivieren das Gewinnen der Medienkomponenteninformationen aus Sitzungsaufbaumeldungen umfasst.

7. Verfahren nach Anspruch 1, wobei das Bereitstellen das Herausfiltern von Daten, die nicht abgehört werden sollen, umfasst.

8. Verfahren nach Anspruch 7, wobei das Bereitstellen das Herausfiltern der Daten, die eine Medienkomponente umfassen, die nicht zu der Sitzung gehört, die abgehört werden soll, umfasst.

9. Verfahren nach Anspruch 7, wobei das Bereitstellen das Ausführen des Filterns basierend auf Medienkomponentenidentifikation oder Gebührenerfassungskennungen umfasst.

10. System zum Abhören von Sitzungen, das einen Abhörknoten und ein Abhörmanagementelement umfasst, wobei
der Abhörknoten konfiguriert ist, um ein Paket einer Sitzung basierend auf Medienkomponenteninformationen der Sitzung, wobei die Sitzung eine IMS-Ebenensitzung ist, zu identifizieren und um duplizierte Pakete der Sitzung für ein Abhörmanagementelement bereitzustellen, wenn das Paket, das abgehört werden soll, identifiziert ist,
**dadurch gekennzeichnet, dass**
der Abhörknoten ausgelegt ist, um ein Paket, das abgehört werden soll, basierend auf Anwenderebenen-Medienkomponenteninformationen, die eine Anwenderebenenidentifikation sind, zu identifizieren.

11. System nach Anspruch 10, wobei die Medienkomponenteninformationen eine Multimediaebenensitzungsidentifikation und eine Steuerebenenmedienkomponentenidentifikation, die der Multimediaebenensitzungsidentifikation zugeordnet ist, umfassen.

12. System nach Anspruch 11, wobei die Multimediaebenensitzungsidentifikation ein Berechtigungs-Token umfasst, die Multimediaebenensitzungsidentifikation eine Multimediagebührenerfassungskennung umfasst oder die Steuerebenenmedienkomponentenidentifikation eine Flusskennung umfasst.

13. System nach Anspruch 10, das ferner ein Abhöraktivierungselement umfasst, das konfiguriert ist, um das Abhören zu aktivieren, wobei die Medienkomponenteninformationen aus einer Sitzungsinitiierungsprozedur gewonnen werden, wobei ein Ziel, das abgehört werden soll, an der Sitzungsinitiierungsprozedur teilnimmt.

14. System nach Anspruch 13, wobei das Aktivierungselement konfiguriert ist, um die Medienkomponenteninformationen aus den Anwenderebenendaten zu gewinnen.

15. System nach Anspruch 14, wobei das Aktivierungselement konfiguriert ist, die Medienkomponenteninformationen aus Sitzungsaufbaumeldungen zu gewinnen.

16. System nach Anspruch 10, das ferner ein Filterelement umfasst, das konfiguriert ist, Daten, die nicht abgehört werden sollen, herauszufiltern.

17. System nach Anspruch 16, wobei die Daten, die nicht abgehört werden sollen, eine Medienkomponente umfassen, die nicht zu der Sitzung, die abgehört werden soll, gehört.

18. System nach Anspruch 16, wobei das Filterelement konfiguriert ist, die Daten, die nicht abgehört werden sollen, basierend auf Medienkomponentenidentifikation oder Gebührenerfassungskennungen herauszufiltern.

19. System nach Anspruch 16, wobei das Filterelement in dem Abhörknoten enthalten ist.

20. System nach Anspruch 16, wobei das Filterelement einen Knoten umfasst, der von dem Abhörknoten getrennt ist.

21. Knoten zum Abhören von Sitzungen, wobei der Knoten Folgendes umfasst:
Identifikationsmittel zum Identifizieren eines Pakets einer Sitzung, die abgehört werden soll, basierend auf Medienkomponenteninformationen der Sitzung, wobei die Sitzung eine IMS-Ebenen-Sitzung ist, und
Bereitstellungsmittel, um dann, wenn das Paket, das abgehört werden soll, identifiziert ist, die duplizierten Pakete der Sitzung für ein Abhörmanagementelement bereitzustellen,
**dadurch gekennzeichnet, dass**
der Abhörknoten ausgelegt ist, um ein Paket, das abgehört werden soll, basierend auf Anwenderebenenmedienkomponenteninformationen, die eine Anwenderebenenidentifikation sind, zu identifizieren.

## Revendications

1. Un procédé d'interception de sessions, comprenant
l'identification (S1, S2) d'un paquet d'une session à intercepter en fonction d'informations de composant multimédia de la session, la session étant une session de niveau IMS et,
si le paquet à intercepter est identifié, la fourniture (S3) de paquets dupliqués de la session à un élément de gestion d'interception,
**caractérisé en ce que**
dans l'identification, le paquet à intercepter est identifié en fonction d'informations de composant multimédia de niveau utilisateur qui sont une identification de niveau utilisateur.

2. Le procédé selon la revendication 1, dans lequel l'identification comprend l'identification du paquet à intercepter en fonction des informations de composant multimédia comprenant une identification de session de niveau multimédia et une identification de composant multimédia de niveau commande associée à l'identification de session de niveau multimédia.

3. Le procédé selon la revendication 2, dans lequel l'identification comprend l'identification du paquet à intercepter en fonction de l'identification de session de niveau multimédia comprenant un jeton d'autorisation, l'identification du paquet à intercepter en fonction de l'identification de session de niveau multimédia comprenant un identifiant de taxation multimédia, ou l'identification du paquet à intercepter en fonction de l'identification de composant multimédia de niveau commande comprenant un identifiant de flux.

4. Le procédé selon la revendication 1, comprenant en outre l'étape suivante :
l'activation de l'interception, qui est exécutée avant l'identification et dans laquelle les informations de composant multimédia sont obtenues à partir d'une procédure de démarrage de session, procédure de démarrage de session à laquelle participe une cible à intercepter.

5. Le procédé selon la revendication 4, dans lequel l'étape d'activation comprend l'obtention des informations de composant multimédia à partir de données de plan utilisateur.

6. Le procédé selon la revendication 5, dans lequel l'activation comprend l'obtention des informations de composant multimédia à partir de messages d'établissement de session.

7. Le procédé selon la revendication 1, dans lequel la fourniture comprend l'exclusion par filtrage de données à ne pas intercepter.

8. Le procédé selon la revendication 7, dans lequel la fourniture comprend l'exclusion par filtrage des données qui contiennent un composant multimédia n'appartenant pas à la session à intercepter.

9. Le procédé selon la revendication 7, dans lequel la fourniture comprend l'exécution du filtrage en fonction d'une identification de composant multimédia ou d'identifiants de taxation.

10. Un système d'interception de sessions comprenant un noeud d'interception et un élément de gestion d'interception, dans lequel
un noeud d'interception est configuré de façon à identifier un paquet d'une session à intercepter en fonction d'informations de composant multimédia de la session, la session étant une session de niveau IMS, et de façon à fournir des paquets dupliqués de la session à un élément de gestion d'interception si le paquet à intercepter est identifié,
**caractérisé en ce que**
le noeud d'interception est adapté de façon à identifier un paquet à intercepter en fonction d'informations de composant multimédia de niveau utilisateur qui sont une identification de niveau utilisateur.

11. Le système selon la revendication 10, dans lequel les informations de composant multimédia comprennent une identification de session de niveau multimédia et une identification de composant multimédia de niveau commande associée à l'identification de session de niveau multimédia.

12. Le système selon la revendication 11, dans lequel l'identification de session de niveau multimédia comprend un jeton d'autorisation, l'identification de session de niveau multimédia comprend un identifiant de taxation multimédia, ou l'identification de composant multimédia de niveau commande comprend un identifiant de flux.

13. Le système selon la revendication 10, comprenant en outre un élément d'activation d'interception qui est configuré de façon à activer l'interception, dans lequel les informations de composant multimédia sont obtenues à partir d'une procédure de démarrage de session, procédure de démarrage de session à laquelle participe une cible à intercepter.

14. Le système selon la revendication 13, dans lequel l'élément d'activation est configuré de façon à obtenir les informations de composant multimédia à partir de données de plan utilisateur.

15. Le système selon la revendication 14, dans lequel l'élément d'activation est configuré de façon à obtenir les informations de composant multimédia à partir de messages d'établissement de session.

16. Le système selon la revendication 10, comprenant en outre un élément de filtre configuré de façon à exclure par filtrage les données à ne pas intercepter.

17. Le système selon la revendication 16, dans lequel les données à ne pas intercepter comprennent un composant multimédia n'appartenant pas à la session à intercepter.

18. Le système selon la revendication 16, dans lequel l'élément de filtre est configuré de façon à exclure par filtrage les données à ne pas intercepter en fonction d'une identification de composant multimédia ou d'identifiants de taxation.

19. Le système selon la revendication 16, dans lequel l'élément de filtre est inclus dans le noeud d'interception.

20. Le système selon la revendication 16, dans lequel l'élément de filtre comprend un noeud distinct du noeud d'interception.

21. Un noeud d'interception de sessions, le noeud comprenant :
un moyen d'identification destiné à l'identification d'un paquet d'une session à intercepter en fonction d'informations de composant multimédia de la session, la session étant une session de niveau IMS, et
un moyen de fourniture, si le paquet à intercepter est identifié, de fourniture de paquets dupliqués de la session à un élément de gestion d'interception,
**caractérisé en ce que**
le noeud d'interception est adapté de façon à identifier un paquet à intercepter en fonction d'informations de composant multimédia de niveau utilisateur qui sont une identification de niveau utilisateur.
